# EUROPEAN PATENT SPECIFICATION

(11) **EP 4 254 044 B1**
(45) Date of publication and mention of the grant of the patent: **21.10.2026**
(21) Application number: 23165534.1
(22) Date of filing: 30.03.2023
(51) Int. Cl.: G02B 27/00, G02C 11/08, H05B 3/84, A42B 3/24

(54) **ANTI-FOGGING EYEWEAR SYSTEM**
ANTIBESCHLAG BRILLENSYSTEM
SYSTÈME DE LUNETTES ANTI-BUÉE

(30) Priority: 31.03.2022 US 202263326029 P
(43) Date of publication of application: 04.10.2023
(73) Proprietor: Galvion Ltd., Portsmouth, NH 03801 (US)
(72) Inventor: Michael, HAZEN, New Boston, NH 03070 (US); Thomas, DION, Haverhill, MA 01835 (US)
(74) Representative: Reitstötter Kinzebach

(56) References cited:
- WO-A1-2015/051248
- CN-A- 103 163 569
- FR-A3- 3 095 773
- JP-A- 2019 056 915
- US-A1- 2018 325 736

## Description

### 1 Cross Reference to Related U.S. Patent Applications

This application claims priority to U.S. Patent Application No. 63/326,029, filed on March 31, 2022 entitled ANTI-FOGGING OPTICAL LENS AND SYSTEM.

### 2 Copyright Notice

A portion of the disclosure of this patent document may contain material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice shall apply to this document: Copyright ^{©} 2022-2023, Galvion, LTD, Portsmouth, NH.

### 3 Background of the Disclosure

### 3.1 Field of the Disclosure

The subject disclosure is directed to anti-fog lenses, and more particularly to systems, software, and methods for clearing condensed vapor from eyewear lenses.

### 3.2 The Related Art

Eyewear lenses are known to fog under cold and/or humid conditions. Water vapor condenses on a portion of a lens that is colder than moisture-bearing air that is in contact with the lens. Condensation can form, for example, on an inner surface of eyewear that is exposed to air that has been warmed and humidified by a user's body heat, moisture released from the skin, or by respiration when the lens is at a lower temperature than the warmed and humidified air; for example, when an outer surface of the lens is exposed to a relatively cool environment. It is desirable to remove condensed moisture from the lens without removing and wiping the eyewear or lens.

Known systems include optically transparent or minimally opaque heating elements such as fine wires and electrically resistive coatings through which electric current is passed for electrically resistive heating to increase a temperature of a lens and thereby dissipate condensed moisture from the lens.

Known systems have been optimized to reduce, during operation, the presence of hot spots in the heating elements and to evenly heat lenses; for example, known systems are configured to ensure that a whole lens is cleared of condensed moisture in a uniform manner. Active anti-fog eyewear systems of the prior art are disclosed in US2018/325736A1.

### 4 Summary of the Disclosure

One problem with conventional systems is that they are designed to distribute current, and to generate heat in an electrically conductive layer of a lens, in a uniform manner across the lens. The inventors have recognized that the distributed heating of lenses provided by known systems, i.e. evenly heating a substantial portion of a lens, engenders relatively slow clearing of condensed vapor or fog from the lens.

The inventors have further recognized that preferentially heating a selected portion of a lens, and in particular a selected portion of the lens positioned in front a user's eyes, enables more rapid clearing of fog from the selected portion, thereby enabling preferential clearing of fog that would otherwise block a user's line of sight.

The present disclosure is directed to embodiments of an active anti-fog (AAF) lens that is configured to actively clear condensed water from a lens, as well as eyewear that includes one or more AAF lenses. The invention relates to an AAF eyewear system as defined in appended claim 1. An active anti-fog (AAF) lens according to the technology described herein, when operated, clears condensation from the lens more rapidly than known anti-fog lenses. In addition, embodiments of the AAF lens are configured to preferentially heat an area of the lens disposed in front of a user's eyes to rapidly clear condensation from that area of the lens and to further maintain at least the area of the lens disposed in front of the user's eyes clear of condensation. This advantageously provides increased situational awareness for the user compared to known systems by providing and maintaining a clear line of sight for the user.

An AAF lens according to the subject technology is usable as a lens component of one or more types of eyewear including, for example, a helmet-mounted visor, a face shield, spectacles, and goggles and can be mounted in a lens holder of these and other types of eyewear.

The technology described herein includes an active anti-fog system that includes an AAF lens as well as a power and control system for powering the AAF lens and for controlling power provided to the AAF lens.

Embodiments of the subject technology are configured to provide initial rapid heating of a selected portion of an exemplary AAF lens, thereby enabling rapid clearing of the selected portion of the AAF lens. A particular embodiment of an exemplary AAF lens is configured for preferentially clearing a portion of the AAF lens that is disposed directly in front of a user's eye when the user is wearing the lens.

**In** at least one aspect, the subject technology relates to a helmet system that includes a helmet and a lens that is attached to the helmet. The lens includes a conductive layer. The conductive layer is configured to receive electrical current. The lens includes at least one region that, in response to the conductive layer receiving electrical current, generates heat faster than other regions of the conductive layer. The at least one region that generates heat faster than other regions is positioned corresponding to eye positions of a wearer of the helmet.

**In** some examples, the helmet system includes a first electrode that is located proximal to a top edge of the lens and that is in electrical communication with the conductive layer, a second electrode that is located proximal to the top edge of the lens and that is in electrical communication with the conductive layer, and a power source that is in communication with both of the first and second electrodes and is configured to provide electrical current through the conductive layer.

**In** at least one aspect, the subject technology relates to an AAF eyewear system that includes a lens holder, an AAF lens, with a conductive layer, that is attachable to the lens holder, and a power supply that is in electrical communication with the conductive layer. The lens holder is configurable to dispose the AAF lens in front of the eyes of a user of the AAF eyewear system with a first portion of the lens disposed in a line of sight of the user. When the power supply provides an electric current to the conductive layer, the first region of the AAF lens generates heat more rapidly than other regions of the AAF lens.

In some embodiments, the AAF lens is removably attachable to the lens holder.

In some embodiments, the lens holder is mountable on a helmet. When the lens holder is mounted on the helmet and a user wears the helmet, the lens holder is configurable to dispose the attached AAF lens in front of eyes of the user, with the first region of the lens positioned along a line of sight of the user.

In some embodiments, when the power supply provides an electric current to the conductive layer, condensed fog is cleared from first region of the lens in 120 seconds or less when tested according to a Natick Soldier Research, Development, and Engineering Center (NSRDEC) Fog Tester protocol.

In some embodiments, the AAF eyewear system includes a first electrode disposed proximal to a top edge of the lens, in electrical communication with the conductive layer, and a second electrode disposed proximal to the top edge of the lens, in electrical communication with the conductive layer. In some embodiments, the first region of the lens is disposed between the first electrode and the second electrode.

In at least one aspect, the subject technology relates to an AAF lens for eyewear that includes an optical lens. The optical lens has an inner surface that is proximal to a wearer when the eyewear is worn as well as an outer surface that opposes the inner surface. An electrically conductive layer is disposed on the inner surface of the optical lens. The AAF lens includes a first electrode disposed proximal to a top edge of the optical lens and a second electrode disposed proximal to the top edge of the optical lens. The first and second electrodes are in electrical communication with the electrically conductive layer. The AAF lens for eyewear also includes a power source in electrical communication with both the first electrode and the second electrode and configured to provide electrical current through the electrically conductive layer.

In some embodiments, the first electrode of the AAF lens is disposed proximal to a right edge of the lens and the second electrode is disposed proximal to a left edge of the lens.

In some embodiments, the AAF lens includes at least one functional layer disposed on the outer surface, the at least one functional layer comprising one or more of: a reflective coating; a hydrophobic coating; and a tint coating.

In some embodiments, the electrically conductive layer includes indium tin oxide (ITO).

In some examples, when an electrical current is supplied by the power source, at least a portion of the lens disposed between the two electrodes and extending towards a bottom edge of the lens is cleared of condensation in 120 seconds or less when tested according to a NSRDEC Fog Tester protocol.

In some examples, when an electrical current is supplied by the power source, a first portion of the lens corresponding to a line of sight of a user of the lens is cleared of condensation in 120 seconds or less when tested according to the NSRDEC Fog Tester protocol.

In some examples, when the AAF lens for eyewear is exposed to a fog environment for at least 10 minutes and an electrical signal is subsequently supplied by the power source, the lens is cleared of condensation in 120 seconds or less.

In some embodiments, the first electrode and the second electrode are each electrically connected to the electrically conductive layer and are each adhered to the optical lens with an electrically conductive adhesive.

In some embodiments, the power source is electrically connected to the first electrode at two or more locations on the first electrode and is electrically connected to the second electrode at two or more locations on the second electrode.

In some embodiments, the power source is electrically connected to the first electrode at three or more locations on the first electrode and is electrically connected to the second electrode at three or more locations on the second electrode.

In some embodiments, the AAF lens is disposed in a frame that encloses at least a portion of a top edge and of the optical lens and does not enclose the bottom edge of the lens. The frame covers the first and second electrodes and includes electrical contacts for electrically connecting with the first and second electrodes.

### 5 Brief Description of the Drawings

In the accompanying drawings, reference characters refer to the same parts throughout the different views. The drawings are not necessarily to scale; emphasis has instead been placed upon illustrating the principles of the disclosure. The features of the present disclosure will best be understood from a detailed description of the subject technology and example embodiments thereof selected for the purposes of illustration and shown in the accompanying drawings.

Various embodiments are depicted in the accompanying drawings for illustrative purposes, and should in no way be interpreted as limiting the scope of the disclosures. In addition, various features of different disclosed embodiments can be combined to form additional embodiments according to the claims. Throughout the drawings, reference numbers can be reused to indicate correspondence between reference elements.
Figure 1 is a front view of a helmet system that includes an active anti-fog (AAF) system including an AAF lens in accordance with the disclosed technology.
Figure 2 is a rear perspective view of a first embodiment of the AAF system of Figure 1.
Figure 3 is a rear perspective view of a second embodiment of the AAF system of Figure 1.
Figure 4A is a side view of an uncoated lens base component of the AAF lens of Figure 2.
Figure 4B is a rear view of the uncoated lens base component of Figure 4A.
Figure 5 is a rear view of the AAF lens of Figure 2.
Figure 6 is a cross section view of the AAF lens of Figure 5, taken through section line 6-6 and includes a cross section view of a display screen.
Figure 7 is a detail view of the AAF lens of Figure 6 at detail callout 7.
Figure 8 depicts an AAF system of Figure 1 including a power and control system shown in schematic view.
Figure 9 is a rear view of the AAF lens of Figure 2 illustrating current flow through a heater layer of the lens.
Figure 10 is a rear view of the AAF lens of Figure 2 illustrating heat distribution.
Figure 11 is a data plot illustrating results of defogging experiments for AAF lenses of the AAF system shown in Figure 8.

### 6 Description of Some Embodiments of the Disclosure

### 6.1 Item Number List

The following item numbers are used throughout, unless specifically indicated otherwise.

| # | DESCRIPTION | # | DESCRIPTION |
|---|---|---|---|
| 100 | Helmet system | 1230 | Second (right) electrode |
| 110 | Helmet | 1232 | Electrical contact |
| 115 | Helmet rim | 1234 | Electrical contact |
| 120 | Retention system | 1240 | Mounting boss |
| 160 | Mounting arrangement | 1242 | Mounting feature |
| 170 | Display device | 1244 | Mounting feature |
| | | 1290 | Inside surface of lens |
| 200 | User | | |
| 210 | Right eye | 1300 | First Frame |
| 220 | Left eye | 1310 | Second Frame |
| | | 1312 | Lens receiving groove |
| 1000 | First Active Anti-Fog (AAF) system | 1314 | Bottom surface of frame |
| 1010 | Second AAF system | 1320 | Cable connector |
| 1050 | Lens base | 1322 | Electrical contact |
| | | 1324 | Electrical contact |
| 1100 | First AAF lens | 1332 | Electrical contact |
| 1110 | Heater layer | 1334 | Electrical contact |
| 1120 | First (left) electrode | 1340 | Cable |
| 1122 | Electrical contact | 1342 | Mounting feature |
| 1124 | Electrical contact | 1344 | Mounting feature |
| 1125 | Primary edge of first electrode | | |
| 1127 | Secondary edge of first electrode | 1600 | Power and control system |
| 1128 | Adhesive | 1602 | Control system button |
| 1130 | Second (right) electrode | 1610 | Controller |
| 1132 | Electrical contact | | |
| 1134 | Electrical contact | | |
| 1135 | Primary edge of second electrode | 1615 | Memory |
| 1137 | Secondary edge of second electrode | 1630 | Power source |
| 1138 | Adhesive | 1640 | Pulse width modulator (PWM) |
| 1140 | Mounting boss | 1650 | User interface (UI) |
| 1142 | Mounting feature | | |
| 1144 | Mounting feature | 1700 | Current paths |
| 1152 | Electrical wire | 1750 | Thermal image of lens |
| 1154 | Electrical wire | | |
| 1160 | First functional layer | 1800 | First heated region |
| 1162 | Second functional layer | 1805 | Unheated region |
| 1170 | First masked area | 1810 | First heated sub-region |
| 1172 | Second masked area | 1820 | Second heated sub-region |
| 1174 | Width of masked area | 1830 | Third heated sub-region |
| 1182 | Left edge of lens | 1840 | Fourth heated sub-region |
| 1184 | Right edge of lens | 1850 | Fifth heated sub-region |
| 1185 | Top left edge of lens | 1860 | Sixth heated sub-region |
| 1186 | Bottom edge of lens | | |
| 1187 | Top right edge of lens | 1900 | Defogging experimental results |
| 1190 | Inside surface of lens | 1910 | Galvion visor 1 results |
| 1191 | Inside surface of lens base | 1920 | Galvion visor 2 results |
| 1192 | Outer surface of lens | 1930 | ABOM goggle results |
| 1193 | Outer surface of lens base | 1940 | 0% haze threshold line |
| | | 1942 | 5% haze threshold line |
| 1200 | Second AAF lens | 1950 | Test 1 start |
| 1210 | Heater layer | 1952 | Test 1 stop |
| 1220 | First (left) electrode | 1954 | Test 2 start |
| 1222 | Electrical contact | 1956 | Test 3 start |
| 1224 | Electrical contact | | |

### 6.2 Detailed Description of the Disclosure

The subject technology now will be described more fully hereinafter with reference to the accompanying drawings, in which illustrative embodiments of the disclosure are shown, and wherein like reference numerals are used to refer to like elements throughout.

In the following description, for purposes of explanation, numerous specific details are set forth in order to provide a thorough understanding of the claimed subject matter. It may be evident, however, that the claimed subject matter may be practiced without these specific details. In other instances, well-known structures and devices are shown in block diagram form in order to facilitate describing the claimed subject matter.

Furthermore, the claimed subject matter may be implemented as a method, apparatus, or article of manufacture using standard programming and/or engineering techniques to produce software, firmware, hardware, or any combination thereof to control a computer to implement the disclosed subject matter.

As used herein, the term "and/or" includes any and all combinations of one or more of the associated listed items. Further, the singular forms of the articles "a," "an," and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence of addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

Additionally, the word "exemplary" is used herein to mean "serving as an example, instance, or illustration." Any implementation described herein as "exemplary" is not necessarily to be construed as preferred or advantageous over other implementations.

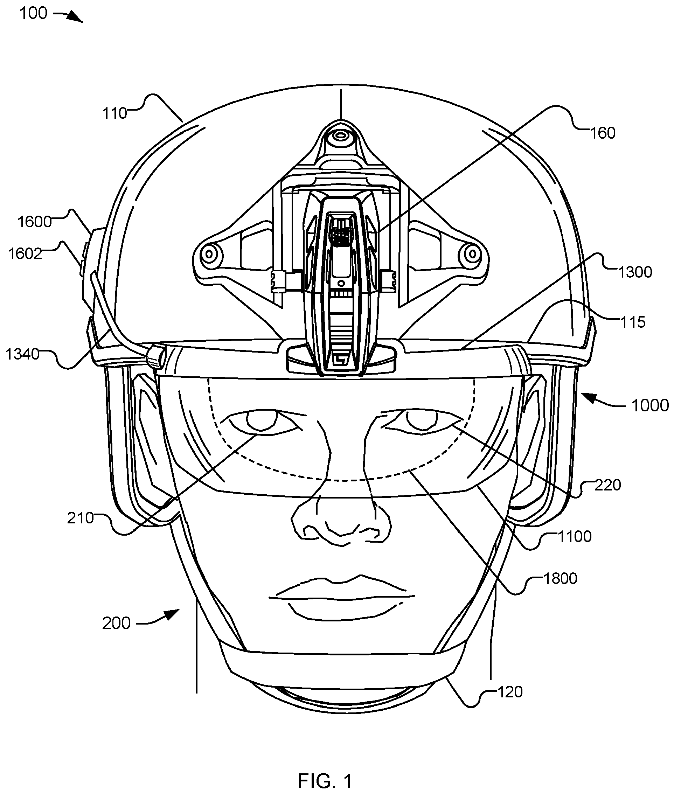

Referring to Figure 1, front view of a helmet system 100 worn on the head of a user 200 is shown. The user 200 has a right eye 210 and a left eye 220. The helmet system 100 includes a helmet 110 for protecting the user's head, for example, from impacts and ballistic projectiles, a retention system 120 attached to the helmet 110 for aiding in retaining the helmet 110 on the user's head, and a visor mounting arrangement 160. An exemplary visor mounting arrangement 160 is disclosed in U.S. Patent Number 10,542,787.

The helmet system 100 includes an embodiment of an active anti-fog (AAF) system 1000. The AAF system 1000 includes an AAF lens 1100 disposed in front of the eyes 210 and 220 of the user 200. The AAF lens 1100 is connected to a frame 1300 which holds and supports the AAF lens 1100. The frame 1300 is attached to the visor mounting arrangement 160 which together position and hold the AAF lens 1100 in front of the user's eyes 210, 220.

In some embodiments, the visor mounting arrangement 160 includes an adjustment means that allows the user to move the AAF lens 1100 between a position in front of the user's eyes, within the user's line of sight, and a position out of the user's line of sight, for example above a rim 115 of the helmet 110, as is known in the art. On other embodiments, the AAF lens 1100 is held in a fixed position relative to the user's eyes.

Although a particular visor mounting arrangement 160 and frame 1300 are shown, any suitable mounting arrangement and frame may be used to hold and position the AAF lens 1100 without departing from the subject technology. In addition, AAF lenses having different shapes and configurations can be substituted for AAF lens 1100 without departing from the subject technology. Example alternative embodiments of AAF lens 1100 include a lens for independently worn eyewear, for example, goggles or a face mask held in place by a strap arrangement or a pair of glasses.

In an exemplary embodiment, the power and control system 1600 includes one or more buttons 1602 or other operable controls for controlling at least some functions of the AAF system 1000.

The power and control system 1600 is attached to a side of the helmet. Alternatively, the power and control system 1600 may be mounted on another portion of the helmet, for example, on the rear of the helmet. In still further embodiments, the power and control system 1600 may comprise multiple interconnected components mounted in different locations; for example, a user interface (UI) component mounted on a side of the helmet near the front and the remainder of the power and control system mounted on the back of the helmet. Alternatively, the power and control system 1600 may be mounted off the helmet; for example, on a garment or on a piece of equipment worn or carried by the user, and attached to the helmet by a wired or wireless connection. In these embodiments, at least a portion of the power and control system 1600 can include an end user device (EUD) carried by a user. For example, an EUD can provide a UI for the power and control system 1600. The power and control system 1600 can operate with, or may comprise a portion of, one or more other control and/or power systems (not shown) of the helmet system 100.

The AAF system 1000 includes a cable 1340 connected to the frame 1300 and to a power and control system 1600 for providing exchange of electrical power, and in some embodiments communication signals, therebetween. In alternative embodiments (not shown) the frame 1300 may communicate with the power and control system over a wireless network. The cable 1340 includes one or more electrical conductors for carrying electrical, and in some embodiments, communication signals between the frame 1300 and the power and control system. In a particular embodiment, the cable 1340 is configured for communication of electrical power signals to the frame 1300 which in turn communicates the electrical power signals to electrical contacts on the AAF lens 1100. In alternate embodiments (not shown) the frame 1300 includes a built-in power and control system, in which case the AAF system 1000 may not include a cable 1340.

The AAF lens 1100 is operable to generate heat. For example, the AAF lens 1100 receives electrical power signals from the power and control system, through the cable 1340 and the frame 1300, and generates heat based on the electrical power signals.

In a particular embodiment, the lens 1100 is operable to rapidly generate heat in a first heated region 1800, which is disposed in front of the eyes 210, 220 of the user. In this manner, the first heated region 1800 is generated by the lens 1100 in a forward facing line of sight of the user. A temperature of the first heated region 1800 is increased to a magnitude where fog is cleared from the first heated region 1800, for example to a temperature greater than a local dew point temperature, before other regions of the AAF lens 1100 are heated. In operation, the first heated region 1800 is preferentially and rapidly cleared of condensed water vapor due to the preferential heating of the first heated region 1800. In this manner, the portion of the AAF lens within the user's line of sight is rapidly cleared and is maintained clear of visual obstruction due to condensed water vapor, which is advantageous to maintaining the user's situational awareness.

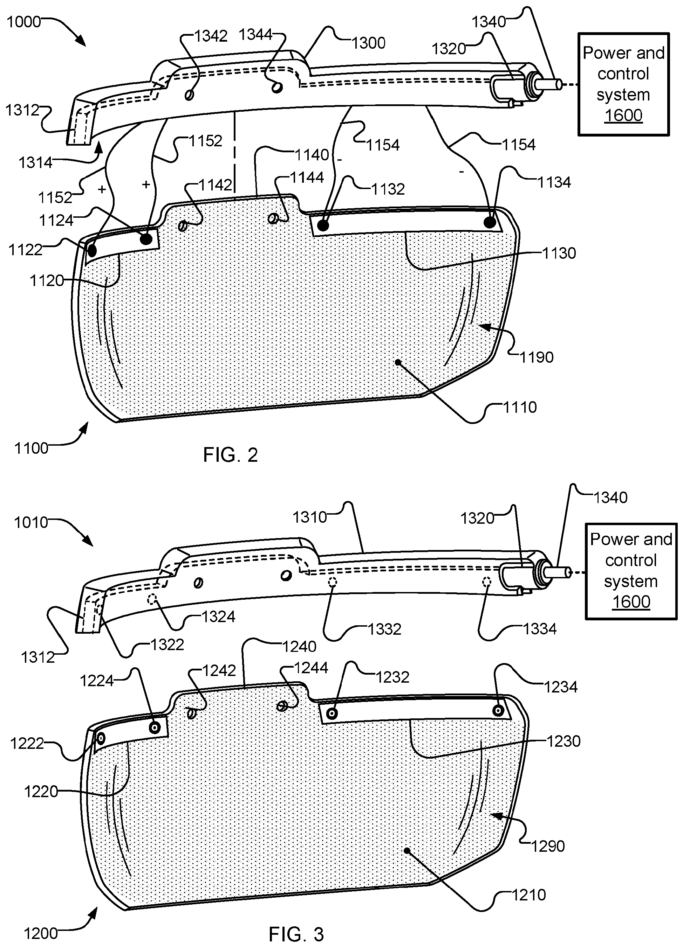

Figure 2 shows a rear exploded view of the AAF system 1000 shown in Figure 1. The power and control system 1600 is illustrated in schematic form and cable 1340 is illustrated in partial schematic form.

The frame 1300 includes a cable connector 1320 that provides at least an electrical connection between the frame 1300 and the cable 1340. The cable connector 1320 can also include one or more communication connections between the frame 1300 and the cable 1340.

The frame 1300 includes a groove 1312, or other partially opened cavity, that extends along and opens onto a bottom surface 1314 of the frame 1300. The groove 1312 is shown in dashed phantom lines to indicate that it is located beneath the outer surfaces of the frame 1300, i.e. that it is an internal feature of the frame 1300. The groove 1312 is configured to hold and cover at least a portion of the top edge of the AAF lens 1100 when the AAF lens is assembled onto the frame 1300. The frame 1300 includes mounting features 1342 and 1344 to enable attaching the AAF lens 1100 to the frame when a top portion of the AAF lens is seated in the groove 1312.

Referring now to Figures 1 and 2, the frame 1300 includes one or more connecting features (not shown) for attaching the frame 1300 to a visor mounting arrangement 160.

Referring once more to Figure 2, the AAF lens 1100 includes a mounting boss 1140 for interfacing with groove 1312 and multiple mounting features 1142 and 1144 to enable attaching the AAF lens 1100 to the frame 1300. In an exemplary embodiment, when the AAF lens 1100 is assembled onto the frame 1300, the lens mounting features 1142, 1144 are aligned with frame mounting features 1342, 1344, enabling assembly of an attachment device (not shown) between the AAF lens 1100 and the frame 1300, thereby attaching the AAF lens 1100 to the frame 1300. When the AAF lens 1100 is assembled with the frame 1300, the frame is attached to the top edge of the AAF lens at least at each of the mounting features 1342, 1344. The AAF lens 1100 is attached to the frame 1300 using any suitable attachment hardware; for example, screws, bolts, pins, or rivets. In embodiments, the AAF lens 1100 can be attached to the frame 1300 using one or more of attachment hardware, an adhesive bond, a clip, or any other suitable connector.

The AAF lens includes an electrically conductive layer, heater layer 1110, disposed on an inner surface 1190 of the AAF lens 1100. It is noted that the inner surface 1190 of the AAF lens faces a user when a helmet system, visor, goggle, spectacles, or the like that includes or holds the AAF lens 1100 are worn by a user. The heater layer 1110 can include one or more optically clear materials that are electrically conductive and that undergo electrically resistive heating when an electric current is passed through the heater layer 1110. An exemplary heater layer 1110 is formed from an indium oxide/tin oxide (ITO) material. In some embodiments, the heater layer 1110 is formed using one or more other materials in addition to or instead of ITO. Example embodiments of the heater layer 1110 may include one or more of electrically conductive metallic (e.g. silver) nanowires, carbon nanotubes, ZnO (zinc oxide), IZO (indium oxide/zinc oxide), AZO (zinc oxide/aluminum oxide), GZO (zinc oxide/gallium oxide), Au (gold), or the like.

Optionally, the AAF lens 1100 includes one or more functional layers. For example, a tint layer or a hydrophobic layer may be disposed on one or both of the outer and inner surface of the AAF lens, wherein the outer surface opposes the inner surface 1190.

The AAF lens 1100 includes a first electrode 1120 and a second electrode 1130, each of which are attached to the AAF lens 1100. Each electrode 1120, 1130 is electrically connected with the heater layer 1110. In an exemplary embodiment, the electrodes 1120, 1130 are attached to the AAF lens 1100 using an electrically conductive adhesive. The electrically conductive adhesive adheres the electrodes to the AAF lens and provides an electrical connection between each electrode and the heater layer 1110.

Two electrical contacts, 1122 and 1124 are disposed on the first electrode 1120 and two electrical contacts 1132 and 1134 are disposed on the second electrode 1130. In alternative or additional embodiments (not shown) different numbers of electrical contacts are disposed on each electrode; for example, in some embodiments, 3, 4, or 5 electrical contacts are disposed on each electrode 1120, 1130.

A separate first wire lead 1152 is electrically connected to each electrical contact 1122, 1124 of the first electrode 1120. A separate second wire lead 1154 is electrically connected to each electrical contact 1132, 1134 of the second electrode. In an example embodiment, the wire leads 1152, 1154 are soldered onto each electrical contact 1122, 1124, 1132, and 1134. The wire leads 1152, 1154 provide electrical communication between the electrodes 1120, 1130 and the power and communication system 1600. In the illustrated embodiment, the first electrode 1120 is a positive electrode and the second electrode 1130 is a negative electrode. The first wire leads 1152 are in electrical communication with a positive terminal of a power source while the second wire leads 1154 are in electrical communication with a negative terminal of the power source. for example, with a DC power source. In alternative embodiments, the first electrode 1120 is a negative electrode and the second electrode 1130 is a positive electrode.

When the frame 1300 and AAF lens 1100 are assembled together, a top portion of the AAF lens 1100, including the electrodes 1120, 1130 and electrical contacts 1122, 1124, 1132, 1134, are disposed in the groove 1312 and covered by the frame 1300. The wire leads 1152, 1154 are also enclosed by the frame 1300 and are electrically connected within the frame 1300 to the cable 1340 through the cable connector 1320. The cable 1340 extends from the cable connector 1320 to the power and control system 1600 to electrically connect the electrodes 1220, 1230 to the power and control system. In some embodiments, the cable 1340 includes one or more communication connections between the frame 1300 and the power and control system 1600.

In some exemplary embodiments, the AAF lens 1100 can be removed from the frame 1300, for example by loosening or removing attachment hardware. The same or a different AAF lens may be mounted on the frame, or a non-AAF lens may be mounted on the frame. This advantageously allows a user to remove and replace a damaged AAF lens 1100 or to replace a lens having first characteristics with a lens having second characteristics. For example, a user may remove an AAF lens 1100 that includes an optional tint layer and replace the tinted AAF lens 1100 with a clear AAF lens 1100.

Figure 3 shows a rear exploded view of a second embodiment of an AAF system 1010. Referring now to Figures 2 and 3, the AAF system 1010 is similar to AAF system 1000, wherein like parts are given like reference numbers. The AAF system 1010 includes a frame 1310, an AAF lens 1200, cable 1340, and a power and control system 1600.

The frame 1310 and AAF lens 1200 are substantially similar to frame 1300 and AAF lens 1100. AAF lens 1200 includes a heater layer 1210 disposed on inner surface 1290 and electrodes 1220 and 1230. However, instead of wire leads connecting the electrodes 1220 and 1230 to the power and control system 1600, the electrodes 1220 and 1230 include electrical contacts 1222, 1224 and 1232, 1234 that are configured to interface with matching electrical contacts 1322, 1324 and 1332, 1334 that are disposed with the groove 1312 of the frame 1310. The electrical contacts 1222, 1224 and 1232, 1234 on the AAF lens 1200 may be configured to electrically connect with corresponding elastically deformable electrical contacts, for example with spring-loaded pins, spring-loaded electrical contacts, spring probes, or pogo pin style contacts 1322, 1324 and 1332, 1334 that are disposed within the groove 1312 of the frame 1310. Alternatively, the AAF lens 1200 may include elastically deformable electrical contacts configured to electrically connect with corresponding electrical contacts on the frame 1310.In still further embodiments, one or both of the AAF lens 1200 and frame 1310 may include plastically deformable electrical contacts or electrical contact that include a non-deformable mechanical interface, for example pins connectors that mate with corresponding receptacles.

Electrical contacts 1322, 1324 and 1332, 1334 of the frame 1310 are electrically connected, via the cable 1340, to the power and control system 1600 and thereby electrically connect the electrodes 1220 and 1230 to the power and control system 1600 when electrically connected to electrical contacts 1222, 1224 and 1232, 1234 of the AAF lens 1200. The use of pogo pin style connectors or the like is advantageous in that in enables simplified assembly of the AAF lens 1200 with the frame 1300, and simplified removal of the AAF lens from the frame.

### 6.2.1 Exemplary method for forming an AAF lens

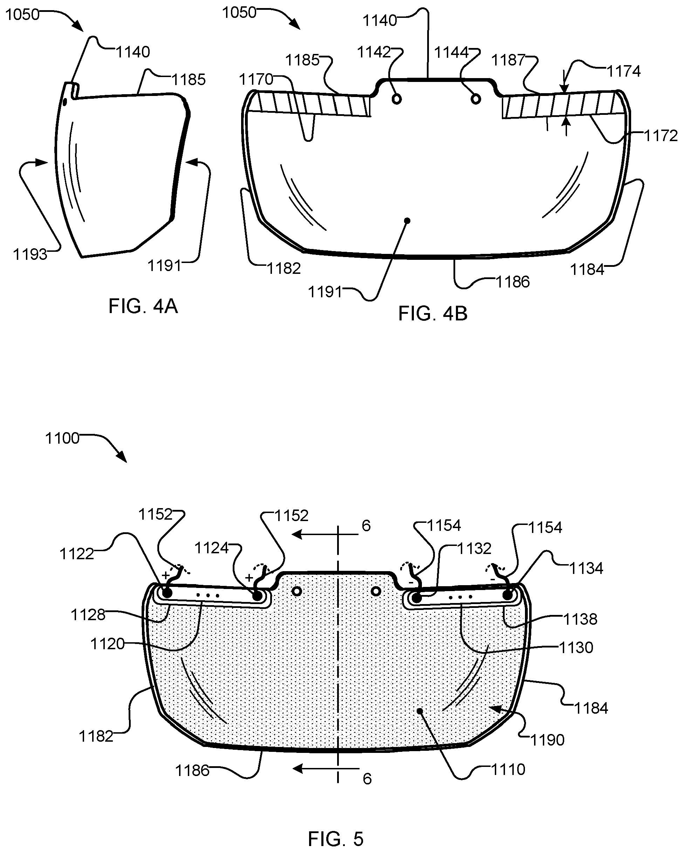

Figures 4A, 4B, 5, 6 and 7 together illustrate an exemplary method for forming an AAF lens 1100 in accordance with the disclosed technology. They also show an exemplary embodiment of an AAF lens 1100 formed according to the method of the technology. Figures 4A and 4B show an uncoated lens base 1050 while Figures 5, 6, and 7 show an AAF lens 1100 that has been formed using the uncoated lens base 1050 as a component of the AAF lens 1100.

Referring to Figures 4A and 4B, the uncoated lens base 1050 includes a left edge 1182, a right edge 1184, and a bottom edge 1186. The uncoated lens base 1050 also includes a mounting boss 1140 and two mounting features 1142 and 1144. The uncoated lens base 1050 further includes a left top edge 1185, disposed to the left of the mounting boss 1140, and a right top edge 1187, disposed to the right of the mounting boss 1140.

The uncoated lens includes an inner surface 1191 and an outer surface 1193. The inner surface 1191 faces a user's face when the lens is worn by the user as a component of eyewear. In the illustrated non-limiting example embodiment the lens includes a concave inner surface 1191 and a convex outer surface 1193. The lens curves from top to bottom and curves from left to right across the width of the lens. The uncoated lens base 1050 can be formed with other lens shapes. For example, the uncoated lens base 1050 can include a flat lens, a lens that curves from left to right but not from top to bottom, etc. without departing from the technology described herein.

The uncoated optical lens base 1050 is formed from a known optical lens material, for example, polycarbonate using a known lens forming process. The uncoated lens base 1050 can be formed using, for example, plastic materials, glass materials, and microcrystalline materials.

The uncoated lens base 1050 is shown prepared for application of materials for forming a heater layer 1110 on the uncoated lens base. A first masked area 1170 is disposed adjacent to the top left edge 1185, and extends approximately from a left side of the mounting boss 1140 toward the left edge 1182. A second masked area 1172 is disposed adjacent to the right top edge 1187 and extends approximately from a right side of the mounting boss 1140 toward the right edge 1184. The masked areas 1170 and 1172 extend downward from the top edges 1185, 1184 for a distance equal to a mask width 1174. An exemplary mask width is 7 mm. Masked areas can be formed with other mask widths and mask shapes, for example, based on a size and shape of an electrode to be included in an AAF lens.

Masked areas 1170 and 1172 are created by an operator on the inner surface 1191 of the uncoated lens base 1050 in preparation for application of a heater layer thereto. The masked areas 1170 and 1172 cover surface areas of the lens from which a heater layer will be excluded and where electrodes will be attached. In some embodiment, the mounting features 1142, 1144 and, optionally, a portion of the mounting boss 1140 are also masked.

The masked areas 1170, 1172 are created by disposing a masking material on the inner surface 1191 of the uncoated lens base 1050 at selected locations during a masking process step. The masking material prevents deposition of an applied heater layer on the masked areas. Masking materials include, for example, Kapton tape or any other suitable known masking material. After masked areas 1170 and 1172 have been created, one or more heater layer materials are disposed on the inner surface 1191 of the lens base 1050, thereby generating a heater layer 1110 on an inner surface 1190 of an AAF lens 1100. In alternate embodiments, masked areas may not be included on the uncoated lens base 1050. For example, masked areas may not be included when a pre-formed or screen printed heater layer will be applied to the lens or when portions of the lens will be cleared of a heater layer following attachment of the heater layer to the lens base 1050.

Referring now to Figures 4A and 5, a heater layer 1110 is disposed on the inner surface 1190 of AAF lens 1100 during a heater material coating process step. The heater layer 1110 is formed on the inner surface 1191 of the uncoated lens base 1050. An exemplary heater layer is formed from an ITO material or using one or more additional or alternative materials, as previously disclosed herein. In an exemplary embodiment, the ITO material may be deposited on the inner surface 1191 of the lens using any known method; for example, the ITO material may be deposited using laser chemical vapor deposition. Other suitable methods for disposing the heater layer 1110 on the lens include printing, sputter coating, and adhering a pre-formed layer to the inner surface 1191 of the lens base 1050.

In exemplary embodiments, the heater layer 1110 is formed with a sheet resistivity of approximately 50 ohms/sheet. In examples, a thickness of a heater layer 1110 is uniform within 1% across the coated surface across the AAF lens 1100. An exemplary heater layer 1110 has a visible light transmittance equal to or greater than 60%.

In an example embodiment, the heater layer 1110 covers the entire inner surface of the AAF lens 1100 except for locations corresponding to the first masked area 1170 and the second masked area 1172. In other embodiments (not shown), the heater layer 1110 may not cover the entire lens surface outside of the masked areas. For example, the heater layer 1110 may not cover the mounting boss 1140 and other portions of the lens that are designed to be covered by a mounting frame (e.g. referring to Figure 2, by frame 1300), or other structures in which the lens is mounted; for example, in a mounting structure comprising goggles.

In further embodiments, the heater layer 1110 may be deposited on selected areas of the lens base 1050 using any suitable method; for example, the heater layer may be deposited by covering the entire interior surface 1191 of lens base 1050 with heater layer material and then removing the heater layer material from desired locations using, for example, an etching process. In other exemplary embodiments a preformed heater layer may be created and then disposed on the lens base 1050 wherein a preformed area of the heater layer is shaped to cover a desired area of the lens base 1050.

The masking material is removed following the heater material coating step, following which the first electrode 1120 and second electrode 1130 are each disposed on the AAF lens 1100 during an electrode adhesion process step. The electrodes 1120 and 1130 are disposed on the lens at the masked areas 1170 and 1172 after the masking material has been removed. The electrodes 1220 and 1230 are each in electrical communication with the heater layer 1110. The first electrode 1120 is located adjacent to the top left edge 1185 of the AAF lens 1100 and the second electrode 1130 is disposed adjacent to the top right edge 1187 of the AAF lens 1100. Both electrodes are disposed adjacent to the top edges 1185, 1187 of the lens. It is notable that the top edges of 1185 and 1187 of the lens are not opposed to each other; i.e. the top edges 1185 and 1187 are non-opposing edges of the AAF lens 1100. In alternative embodiments, an AAF lens may not include a mounting boss 1140, in which case the top left edge 1185 of the lens and the top right edge 1187 of the lens may be designated by their proximity to left edge 1182 and right edge 1184, respectively, with a boundary between the two top edges 1185 and 1187 designated by a midpoint between the left and right edges 1182, 1184, for example by section line 6-6 or the like.

The electrodes 1120, 1130 are each formed from an electrically conductive material; for example, from an electrically conductive metal. Example electrically conductive materials that can be used to form the electrodes 1120, 1130 include copper and nickel. Each electrode can be formed as a busbar.

In some embodiments, the electrodes 1120 and 1130 are attached to the AAF lens 1100 using an electrically conductive adhesive 1128 and 1138, for example, an electrically conductive epoxy or an electrically conductive tape. Exemplary electrically conductive epoxies useful for attaching an electrode 1120 or 1130 to the AAF lens 1100 include a silver-containing epoxy. Exemplary silver-containing epoxies include and epoxy provided by MG Chemicals Ltd., Ontario, Canada (MG Chemicals epoxy); and a Frost Fighter branded silver-containing epoxy, manufactured by The PipeKnife Company of Golden, Colorado, USA (Frost Fighter epoxy). In some exemplary embodiments, a standard defroster grid repair paint may be used, in some embodiments in addition to an electrically conductive epoxy, to improve electrical conductivity of an interface between an electrode 1120 or 1130, and a heater layer 1110.

In embodiments that include an electrically conductive adhesive 1128, 1138, the electrodes 1120, 1130 are in electrical communication with the electrically conductive adhesive and the electrically conductive adhesive is in electrical communication with the heater layer 1110. In these embodiments, the electrodes 1120, 1130 are in electrical communication with the heater layer 1110 via the electrically conductive adhesive 1128, 1138.

In some exemplary embodiments, an electrode 1120, 1130 may be formed using an electrically conductive tape that includes an adhesive layer, in which case a separate electrically conductive adhesive 1128, 1138 may not be required. An exemplary electrically conductive tape includes a copper tape. In these embodiments, the electrically conductive tape is disposed in electrical communication with the heater layer 1110.

Each electrode 1120, 1130 includes multiple electrical contacts; for example, electrical contacts 1122, 1124, 1132, and 1134. Each electrical contact 1122, 1124 of the first electrode 1120 is connected to a first wire lead 1152. Each electrical contact 1132, 1134 of the second electrode 1130 is connected to a second wire lead 1154.

The wire leads 1152, 1154 are attached to the electrodes in a wire lead connection process step. In an exemplary embodiment, the wire leads 1152, 1154 are connected to the electrodes 1120, 1130 using a soldering operation. Alternatively, the wire leads 1152, 1154 may be connected to the electrodes 1120, 1130 with a mechanical connector; for example, a releasable clip. In an alternative embodiment, as previously disclosed, the electrical contacts can include contacts for mating with matching contacts; for example, with a pogo pin style electrical connector. In an exemplary embodiment, a wire lead 1152 or 1154 includes an electrically conductive wire and is electrically coupled, via an electrical contact 1122, 1124, 1132, or 1134 to an electrode 1120, 1130. As disclosed herein, and referring to Figure 3, an alternative electrical connection with an electrode 1120 or 1130 can include an electrical contact, e.g. 1222 for mating with a pogo pin style electrical connector 1322.

In non-limiting exemplary embodiments, at least one, and in some embodiments two or more, electrical leads wire leads 1152, 1154 or connectors (e.g., 1122 or 1222) are connected to each electrode 1120, 1130. In non-limiting examples, from 1 to 5 wire leads or connectors are attached to each electrode. For example, 2, 3, 4, or 5 wire leads or connectors may be attached to each electrode. In an embodiment 2 wire leads or connectors are attached to each electrode. In another exemplary embodiment, 5 wire leads or connectors are attached to each electrode.

The wire leads 1152, 1154 are in electrical communication with the electrical contacts 1122, 1124, 1132, and 1134 which are in electrical communication with the electrodes 1120, 1130. The electrodes 1120, 1130 are in electrical communication with the heater 1110 layer; in some embodiments via the electrically conductive adhesive 1128, 1138.

Referring now to Figures 2 and 5, the wire leads 1152, 1154 can be electrically connected to a power source that is part of the power and control system 1600, for example, to a DC power source. In an exemplary embodiment, the first wire leads 1152 are electrically connected to a positive terminal of the power source while the second wire leads 1154 are electrically connected to a negative terminal of the power source. Alternatively, the second wire leads 1154 can be connected to the positive terminal of the power source and the first wire leads 1152 can be connected to the negative terminal of the power source.

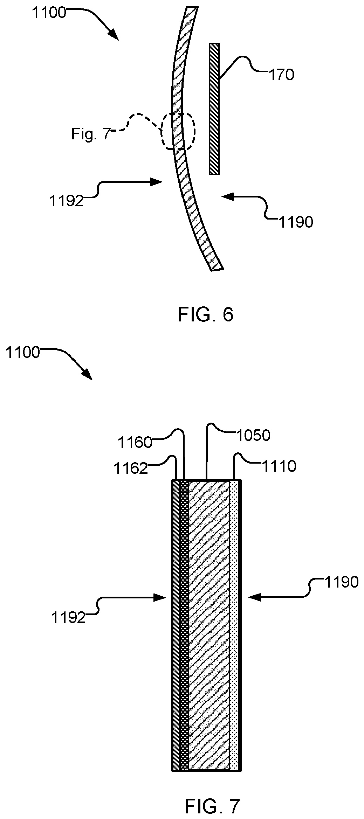

As shown in Figure 6, an additional display device 170 can be positioned behind an AAF lens 1100. The additional display device 170 is disposed between the AAF lens 1100 and a user when the additional display device 170 and the AAF lens are both worn by the user. The additional display device 170 can include a passive or active viewing device. For example, an additional display device 170 can include an active or passive lens or display screen; or a lens of a pair of prescription or non-prescription spectacles. In an exemplary embodiment, the additional display device includes an augmented reality (AR) display for example, a display that uses waveguide technology, e.g., a waveguide combiner. In an exemplary embodiment, the additional display device 170 includes a heads-up display (HUD) positioned in front of an eye of a user. The additional display 170 can include a flat or a curved display surface.

Referring now to Figures 6 and 7, the AAF lens 1100 includes an inner surface 1190 and an outer surface 1192. As noted herein, inner surface 1190 faces the face of a user who is wearing eyewear that includes the AAF lens 1100. The AAF lens 1100 includes the lens base 1050, the heater layer 1110, and one or more functional layers 1160, 1162.

The heater layer 1110 is disposed on the inner surface 1190 of the AAF lens 1100. One or more functional layers, e.g. functional layers 1160, 1162, are disposed on the outer surface 1192 of the AAF lens. Exemplary functional layers include a tint layer, an antireflective layer, and a hydrophobic layer. Additional or alternative exemplary functional layers include one or more of: an anti-fog layer; an anti-glare layer; a scratch resistant layer; a hydrophilic layer; a thermally insulating layer; a color enhancement filter; a chroma enhancement filter; a laser attenuation filter layer; a layer including an electrochromic cell; an electrochromic filter layer; and a layer that includes a color enhancement filter.

In an exemplary embodiment, a first functional layer 1160 that includes a tint and/or antireflective layer is disposed on the lens base 1050 and a second functional layer 1162 that includes a hydrophobic coating is disposed on the first functional layer 1160. Exemplary embodiments and an AAF lens 1100 can include more or fewer functional layers; for example, an AAF lens may include one, three, four, or more functional layers disposed on an outer surface 1192 of the AAF lens 1100. Some embodiments of the AAF lens 1100 do not include any functional layers.

### 6.2.2 Exemplary AAF system

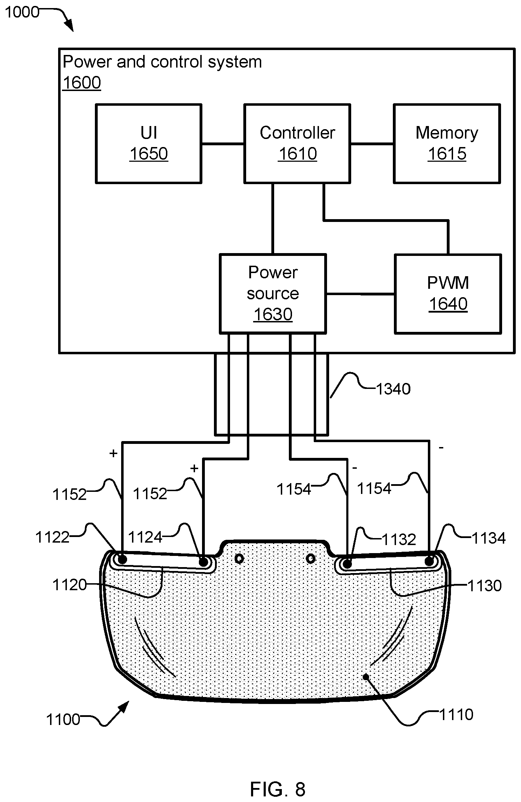

Referring to Figure 8, an AAF system 1000 includes an AAF lens 1100 and a power and control system 1600. The power and control system 1600 includes a controller 1610 that includes or is in communication with a memory 1615. The controller 1610 is communicatively connected with a power source 1630 and with a pulse width modulator (PWM) 1640. The power source 1630 provides electrical power signals to the AAF lens 1100. The PWM 1640 controls a duty cycle of the power source 1630. The PWM 1640 is electrically connected to the power source 1630.

The power and control system further includes a user interface (UI) 1650 that is in communication with the controller 1610. The UI enables a user to enter control commands for the controller 1610. The controller 1610 communicates control signals to the power source 1630 and the PWM 1640 for controlling operation thereof; for example, in response to the control commands. In some embodiments, the processor 1610 communicates control signals based at least upon information stored in the memory 1615.

The AAF lens 1100 includes a first electrode 1120 and a second electrode 1130, each with 2 electrical contacts 1122, 1124 and 1132, 1134. The first electrode 1120 is connected to a positive terminal of the power source 1630 over a power pathway that includes two wire leads 1152 and the cable 1340. The second electrode 1130 is connected to a negative terminal of the power source 1630 over a power pathway that includes two wire leads 1154 and the cable 1340. In alternative embodiments, the electrodes 1120 and 1130 can each have more or fewer electrical contacts, and corresponding wire leads; for example, 5 electrical contacts per electrode.

The controller 1610 communicates command signals to the power source 1630 to control the power source to provide an electrical power signal; for example, a 9V electrical power signal, to the heater layer 1110 of the active anti-fog lens 1100. The electrical power signal produces electrical current that passes through the heater layer.

The controller 1610 communicates command signals to the pulse width modulator 1640 which in turn provides a PWM signal to the power source 1630. The power source 1630 operates with a duty cycle corresponding to the PWM signal. Example duty cycles can range 1 to 100% wherein the power source 1630 provides an electrical signal to the heater layer for a portion of a time period, where the portion of the time period corresponds to the duty cycle; for example, 1%, 10%, 30%, 50%, 60%, or 100% on the time period.

In embodiments, the UI 1650 includes one or more controls that allow a user to select at least one operational parameter of the AAF system 1000. An exemplary, non-limiting, UI 1650 includes one or more of: buttons or switches; a dial selector; a slidable or rotatable continuous range selector; a touch screen; a voice recognition device; or any other suitable user interface device. In some embodiments, the UI 1650 includes or comprises a graphical user interface (GUI) that is displayed on a screen component of the power and control system 1600 or that is displayed on a screen of a separate device; for example, a GUI that is displayed on a screen of an end user device (EUD), not shown, that is in communication with the power and control system 1600.

In a particular example, referring now to Figures 1 and 8, an exemplary power and control system 1600 includes two or more buttons 1602 that form at least a portion of the UI 1650. A user can manipulate the buttons 1602 to select an operating mode of the AAF system 1000 and generate control commands that are communicated from the UI 1650 to the controller 1610. In response to manipulation of the buttons 1602 by the user, the controller 1610 generates and communicates control signals to the power source 1630 and/or the PWM 1640. In some embodiments, a UI 1650 can include a software application running on an end user device (EUD) that presents, on a screen of the EUD, icons, menu, or other selection interface that a user can interact with to select at least one operational parameter of the AAF system 1000. Exemplary EUDs include a smartphone, a tablet computer, or another computerized device that includes a display screen.

In an exemplary embodiment, a user interacts with the UI 1650 to provide instructions to turn the AAF system 1000 on or off and to select a particular duty cycle. In an exemplary embodiment, the UI 1650 is configured to allow a user to select one of a low, medium, high, or off setting. In a particular exemplary embodiment, a low setting corresponds to a 30% duty cycle, a medium setting corresponds to a 60% duty cycle, and a high setting corresponds to a 100% duty cycle. In an alternative embodiment, the UI can be configured to allow a user to directly select a particular duty cycle, e.g. by entering a number or by operating a slider or wheel.

The controller 1610 receives a control command signal from the UI 1650 that includes a selected duty cycle. The controller 1610 generates, and communicates to the PWM 1640, one or more control signals that include the selected duty cycle. The PWM communicates a PWM signal corresponding to the selected duty cycle to the power source 1630 or otherwise controls operation of, or affects output of, the power source 1630 to provide, to the AAF lens 1100, electrical power signals according to the selected duty cycle. In other embodiments, the UI 1650 may be configured to allow a user to select from more or fewer settings, each of which correspond to a particular duty cycle.

### 6.2.3 Exemplary current flow through a heater layer

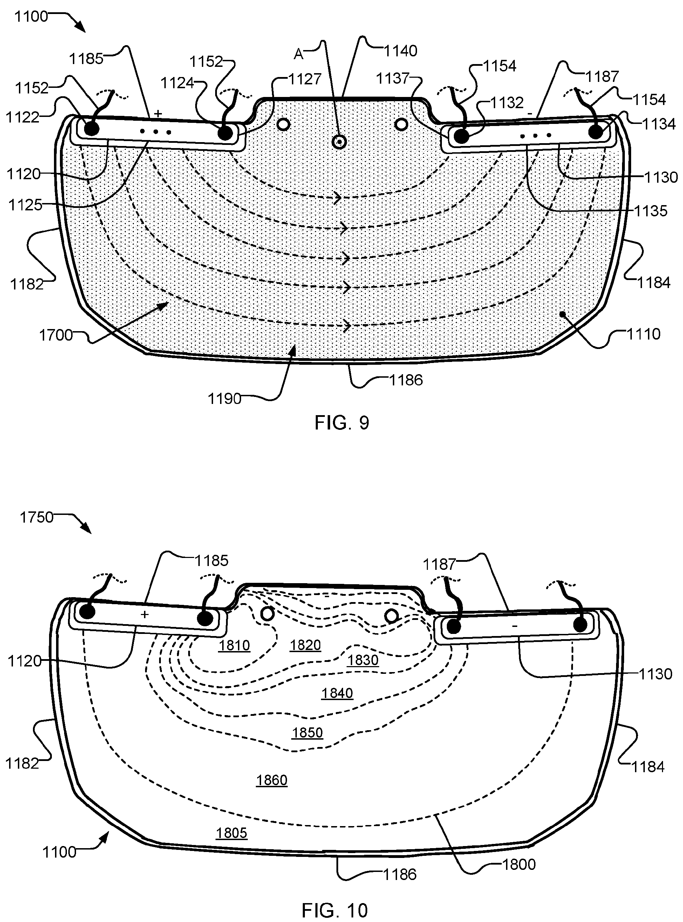

Referring to Figure 9, an exemplary embodiment of an AAF lens 1100 is shown. Dashed lines 1700 indicate current flow between the first electrode 1120 and the second electrode 1130. The electrodes 1120, 1130 may be in direct electrical communication with the heater layer 1110 or may be in electrical communication with the heater layer via an electrically conductive adhesive 1128, 1138 disposed between the electrode and the heater layer 1110.

An AAF lens according to the subject technology includes electrodes or busbars disposed along non-opposing edges of a lens or of a heated portion of the lens. For example, each electrode 1120 and 1130 is located adjacent to a top edge of the lens, 1185 and 1187 respectively. The first electrode 1120 is disposed proximate to the left edge 1182 and top left edge 1185 of the AAF lens 1100. The second electrode 1130 is disposed proximate to the right edge 1184 and top right edge 1187 of the AAF lens 1100. The first and the second electrodes 1120, 1130 are separated from each other by the mounting boss 1140. In an alternative embodiment that does not include the mounting boss (not shown), the first and second electrodes 1120, 1130 may be separated from each other by a specified distance. According to the claimed subject-matter, the first and second electrodes 1120 and 1130 may both be disposed along the bottom edge 1186 of the AAF lens 1100.

The first electrode 1120 has a length corresponding to a primary edge 1125 and a width corresponding to a secondary edge 1127. The second electrode 1130 has a length corresponding to a primary edge 1135 and a width corresponding to a secondary edge 1137. As defined herein, the length of a primary edge (1125 or 1135) of an electrode (1120 or 1130) is greater than the length of secondary edge (1127 or 1137) of the electrode. For example a primary edge may be at least twice as long as a secondary edge; e.g. a primary edge may be at least four to six times longer than a secondary edge. The first and second electrodes, 1120 and 1130, are disposed on the AAF lens 1100 on non-opposing edges of the lens such that the primary edge 1125 of the first electrode does not oppose the primary edge 1135 of the second electrode. In the example embodiment, the primary edge 1125 of the first electrode 1120 is disposed rotated approximately 180 degrees relative to the primary edge 1135 of the second electrode 1130 around an axis A that extends perpendicularly from the inner surface 1190 of the AAF lens 1100.

A power source (not shown) is in electrical communication with the AAF lens 1100. Referring now to Figure 8, the power source may include power source 1630 of a power and control system 1600. Referring once again to Figure 9, the power source provides electrical current to the electrodes 1120 and 1130. When an electrical signal is provided to the heater layer 1110 by the power source via the electrodes 1120, 1130, electrical current passes through the heater layer, as illustrated by dashed lines 1700.

It is notable that the electrode arrangement of the present disclosure differs from electrode arrangements according to the known art. Known heated eyewear include a heater layer on a lens with electrodes or busbars in electrical communication with the heater layer. The known electrodes or busbars are disposed along opposing edges of the lens, i.e. on opposing sides of a heating zone of the heater layer such that electrical current passes through the heater layer from one edge towards an opposing edge of a lens. For example current flow according to the known art is from a top edge of a lens towards a bottom edge of the lens; or from a left edge of a lens towards a right edge of the lens; or vice versa.

Without wishing to be constrained by a particular theory, the inventors believe that electrical current 1700 from a first electrode disposed near a top edge of the AAF lens 1100 (for example from the first electrode 1120 disposed near the top left edge 1185), downwards towards the bottom edge 1186 of the lens, across the lens (for example in a direction extending from the left edge 1182 toward the right edge 1184), and upwards to another electrode (for example to the second electrode 1130) near the top of the lens, e.g. near top right edge 1187. Current passes more rapidly over relatively shorter current paths, which are located closer to the top edges 1185 and 1187 which engenders rapid heating of the regions corresponding to the shorter current paths. Electrical current can flow from left to right or from right to left, depending on which electrode is configured as a positive electrode and which electrode is configured as a negative electrode.

### 6.2.4 Experimental results

### 6.2.4.1 Exemplary lens heating experiments

Figure 10 shows a schematic view of a thermal image 1750 of an AAF lens 1100 under power. The AAF lens 1100 includes a first electrode 1120, which is configured as a positive electrode, and a second electrode 1130, which is configured as a negative electrode. Referring now to Figures 8 and 10, power was supplied to the electrodes 1120, 1130 by an embodiment of a power and control system 1600.

Referring once again to Figure 10, the thermal image 1750 was acquired under the following conditions: room temperature = 21.8°C and humidity = 65%. An electrical power signal provided to the AAF lens 1100 had the following characteristics: voltage = 9V DC, duty cycle = 100%. Electrical power was applied to the AAF lens 1100 and temperature and temperature distribution of the AAF lens 1100 were observed using a thermal camera. The thermal image 1750 was acquired after temperature equilibrium of the AAF lens 1100 was reached, i.e. when no further changes in temperature and temperature distribution were observed.

The thermal image 1750 includes multiple temperature bands, as indicated by dashed lines. The first heated region 1800 includes temperatures ranging from approximately 24°C to approximately 40°C. Temperatures outside of the first heated region 1800, in region 1805, range from approximately room temperature to approximately 24°C, near the interface with the first heated region 1800. Approximate temperature ranges observed in the temperature bands 1810 through 1860 are included in Table 1:

**Table 1: Approximate temperature ranges for regions within the first heated region 1800**

| Region | Temperature |
|---|---|
| 1810 | 38-40°C |
| 1820 | 35-38°C |
| 1830 | 33-35°C |
| 1840 | 30-33°C |
| 1850 | 28-30°C |
| 1860 | 24-28°C |

Temperature gradients within the first heated region 1800 are evident. The hottest regions 1810 and 1820 of the lens are located near a central portion of a horizontal dimension of the lens, between left edge 1182 and right edge 1184. The hottest regions 1810 and 1820 have temperatures that are approximately 1.5 to 1.7 times greater than a temperature of the region 1805 disposed outside of the first heated region 1800. Exemplary temperatures in the first heated region 1800 are approximately 1.2 to 1.7 times greater than a temperature of the region 1805. These hottest regions 1810 and 1820 are on a portion of the AAF lens 1100 that includes the shortest distances for current to travel between the electrodes 1120 and 1130. The hottest regions generate heat more rapidly than other regions of the lens.

The first heated region 1800 of the AAF lens 1100 is located in front of a user's eyes, and in the user's line of sight, when the AAF lens 1100 is worn by the user as a component of eyewear; for example, when the AAF lens is attached to a helmet that is worn by the user. The first heated region of the lens 1800 defogs faster than other regions of thermal image 1750 of the AAF lens 1100. The subject technology thus enables preferential defogging of the portion of the AAF lens directly in front of the eyes, i.e. of the first heated region 1800, while the rest of the lens may not be defogged as quickly as the first heated region. This is advantageous for maintaining the user's situational awareness by rapidly clearing a region of the lens directly in the user's line of sight even while other portions of the lens may remain fogged for a longer period of time.

### 6.2.4.2 Exemplary lens defogging experiments

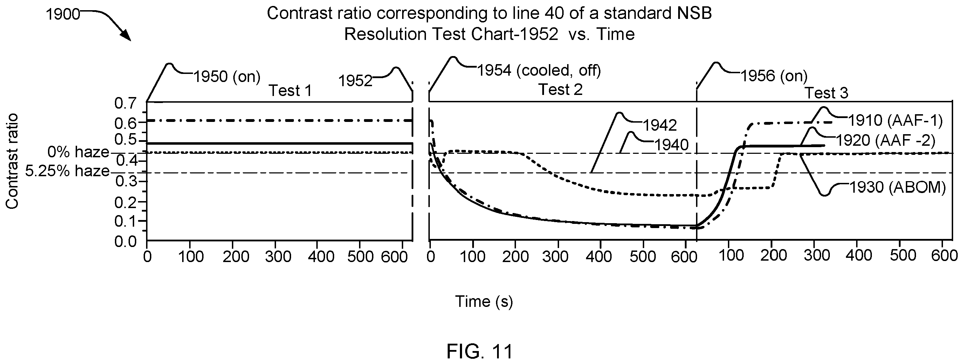

Figure 11 includes a plot 1900 showing contrast ratio versus time. The contrast ratio values positively correlate with a greater observable resolution, wherein a higher contrast ratio value can be correlated with a higher observable resolution. A contrast ratio value below a threshold value, for example below 0.45, is an indication that lens is at least partially fogged. Plot 1900 illustrates defogging test results for two embodiments of AAF lenses 1100 as well as test results for a consumer off the shelf product, ABOM HEET goggles, provided by Abom, Inc., Portland, OR.

A first visor, Visor 1, and a second visor, Visor 2, that each include an AAF lens (e.g. 1100) according the technology described herein were tested along with the ABOM HEET goggles. Results for visors configured with AAF lenses are indicated by dot-dash-dot line plot line 1910 and solid plot line 1920. Results for the ABOM HEET goggles are indicated by dashed plot line 1930.

Now referring to Figures 5 and 11, the visors had the following configurations:

Visor 1 (plot line 1910): Includes first and second electrodes 1120, 1130 each made from nickel adhered to the AAF lens 1100 with adhesive 1128, 1138 consisting of Frost Fighter epoxy.

Visor 2 (plot line 1920): Includes first and second electrodes 1120, 1130 each made from nickel, adhered to the AAF lens 1100 with adhesive 1128, 1138 consisting of MG Chemicals epoxy.

Testing was performed using an Eyewear Fog Tester Apparatus at the Natick Soldier Research, Development, and Engineering Center (NSRDEC). The testing included exposing one or more lenses under test to a fog environment; for example exposing the lenses under test to a humid environment in which condensation of water vapor on the lenses may be expected. More particularly, testing was performed following a NSRDEC Fog Tester protocol. An apparatus that is substantially similar to the Eyewear Fog Tester Apparatus is disclosed in U.S. Patent No. 8365619.

Testing following the NSRDEC Fog Tester protocol included mounting eyewear on a hollow model of a human head, over the eye portions of the model. The model includes through holes between the hollow interior of the model and the exterior of the model at the eye locations. A video sensor was positioned behind the model and a standard NSB Resolution Test Chart-1952 was positioned in front of the model. A hole passing through the model provided a clear line of sight from the camera to the Resolution Test Chart through a lens of the eyewear under test, e.g. through an AAF lens 1100 or a lens of ABOM HEET goggles. When AAF lenses 1100 were tested, the camera line of sight passed through the first heated region 1800.

Following the NSRDEC Fog Tester protocol, fog conditions were created by using a pump to fill the interior of the model with humid air, which was allowed to pass through the holes at the eye locations and impinge on an inner surface of a lens, i.e. of a surface of a lens facing the model. For example, humid air was allowed to impinge on the inner surface 1190 of embodiments of an AAF lens 1100 and on the inner surface of an ABOM goggle lens.

Concurrently to creation of the fogging conditions, and following the NSRDEC Fog Tester protocol, the video sensor was used to image the standard NSB Resolution Test Chart-1952 through the goggle lens, e.g. through AAF lens 1100. Images of the Test Chart made during testing were processed using standard techniques to generate resolution scores, as is known in the art.

A known haze calibration standard was used to estimate a haze magnitude as a function of resolution magnitude, as is also known in the art. A lower resolution is indicative of a greater haze magnitude. Haze magnitude of 0% indicates that a lens is clear of condensation while haze magnitude of greater than 0% indicates that a lens is at least partially fogged by condensation, with an amount of fogging positively correlated with haze magnitude.

Test 1 includes testing of subject eyewear in a powered state while they are subjected to fogging conditions. Test samples of the subject eyewear were powered on, allowed to preheat, and remained on while being exposed to fog conditions for 10 minutes, beginning at time stamp 1950 and ending at time stamp 1952. Power settings for the visors with AAF lenses 1100, corresponding to plot lines 1910 and 1920, were 9V DC power applied at 100% duty cycle, i.e. at a high setting.

The plot 1900 shows that visors that include AAF lenses and the ABOM goggles did not show any fogging when exposed to constant fog conditions for 10 minutes while they were powered on. This is evident in that contrast for each remained at or above a contrast level correlating to 0% haze, indicated by line 1940.

Following test 1, the test samples were powered off at timestamp 1952 and allowed to cool for 10 minutes while remaining on the NSRDEC Fog Tester apparatus, thereby reducing a temperature of the test samples to approximately a chamber temperature of 6°C. This cooling off period is indicated by a gap between time stamp 1952 and time stamp 1954.

During test 2, the test samples were exposed to fog conditions while powered off. The unpowered test samples were exposed to fog conditions for 10 minutes, beginning at time stamp 1954 and ending at time stamp 1956. All test samples fogged up under the test conditions, as indicated by plot lines 1910, 1920, and 1930 dipping below line 1940, which corresponds to 0% haze. The visors that include AAF lenses 1100, corresponding to plot lines 1910 and 1920, took longer to become fogged up as compared to ABOM HEET goggles as indicated by plot line 1930 dipping below line 1940 sooner than plot lines 1910 and 1920.

Test 3 immediately followed test 2. At time stamp 1956, power was supplied to subject eyewear that remained fogged as a result of conditions applied during test 2. The subject eyewear was not exposed to further fog conditions following time stamp 1956, i.e. no additional humid air was provided.

Power settings for the visors with AAF lenses 1100, corresponding to plot lines 1910 and 1920, were 9V DC power applied at 100% duty cycle, i.e. at a high setting.

An amount of time it took to clear the lenses after power was supplied was determined. Results show that eyewear with AAF lenses 1100, indicated by plot lines 1910 and 1920, cleared faster than the ABOM HEET goggles, indicated by plot line 1930. The first AAF lens 1100, indicated by plot line 1910, cleared of condensation in approximately 2 minutes and 25 seconds while the second AAF lens 1100, indicated by plot line 1920, cleared in approximately 2 minutes. The ABOM HEET lens, indicated by plot line 1930, took 5 minutes 25 seconds to clear. Based on these results, an AAF lens 1100, and in particular a first heated region 1800 of the AAF lens 1100 is operable to clear fog faster than a known COT heated lens.

Testing was conducted to determine defogging times associated with multiple embodiments of AAF lenses, e.g. of AAF lens 1100. Table 2 includes details of these embodiments, labeled 1101 through 1106. The embodiments were created following the methods described in relation to Figures 4A, 4B, and 5 through 7 with the exception that lenses 1101 and 1102 did not include a separate conductive adhesive 1128 and 1138. Instead, for these embodiments, copper tape electrodes were directly adhered to an AAF lens 1100. AAF lens embodiments of Table 2 include a number of different types of electrodes 1120, 1130, electrically conductive adhesives 1128, 1138, and additional functional layers as shown in Table 2 below. For all embodiments, two wire leads 1152, 1154 were soldered onto the electrodes 1120, 1130. Each lens includes a heater layer 1110 formed with ITO.

**Table 2: AAF lens embodiments**

| AAF lens | Functional layer (1162) | Electrodes (1120, 1130) | Conductive Adhesive (1120, 1130) |
|---|---|---|---|
| 1101 | None | Copper tape | N/A |
| 1102 | Tint | Copper tape | N/A |
| 1103 | None | Nickle | Frost Fighter Epoxy |
| 1104 | Tint | Nickle | Frost Fighter Epoxy |
| 1105 | None | Nickle | MG Chemicals Epoxy |
| 1106 | Tint | Nickle | MG Chemicals Epoxy |

Defogging experiments included fogging the lenses, i.e. allowing water vapor to condense on the lenses, by exposing the lenses to fogging conditions. Fogging conditions included positioning a lens being tested over a container of boiling water under the following conditions: Room temperature = 72° F; humidity = 65%.

The lenses (1101 through 1106) were exposed to a fog environment for 30 seconds, at which point they were fully fogged; i.e. water vapor was deposited on at least an inner surface, e.g. 1190, of each lens. The lenses were then powered on. Each lens was operated at high power level (100% duty cycle) with a 9V electrical power signal. Defogging time was measured, and recorded in Table 3. Defogging time was defined as amount of time for a lens to appear to be clear of condensation after an electrical power signal was applied to the lens.

**Table 3: Defogging Time for embodiments of AAF lens 1100**

| Lens | Avg. defog time |
|---|---|
| | (Min:sec) |
| 1101 | 1:49 |
| 1102 | 1:02 |
| 1103 | 1:00 |
| 1104 | 1:06 |
| 1105 | 1:13 |
| 1106 | 1:23 |

### 6.2.4.3 Exemplary lens power experiments

Referring to Table 2, experiments were performed to determine power generated on multiple embodiments of AAF lenses 1100. Electrical power signals were supplied to embodiments of AAF lenses 1101 through 1106 and power was determined. Each lens was subjected to three electrical power signals, each at 9V with one of three duty cycle settings: low (30% duty cycle); medium (50% duty cycle); and high (100% duty cycle). Current was measured and power was calculated based on the measured current and the applied 9V electrical signal. Results are included in Table 4.

**Table 4: Power at low, medium, and high settings**

| Lens | Power - Low setting (mW) | Power - Medium setting (mW) | Power - High setting (mW) |
|---|---|---|---|
| 1101 | .328 | 0.616 | 1.05 |
| 1102 | .315 | 0.626 | 1.10 |
| 1103 | .388 | 0.766 | 1.28 |
| 1104 | .334 | 0.658 | 1.09 |
| 1105 | .350 | 0.686 | 1.13 |
| 1106 | .380 | 0.712 | 1.18 |

Further experiments were conducted to determine electrical resistance values corresponding to embodiments of AAF lenses; for example, embodiments of AAF lens 1100. All lenses included a heater layer 1110 formed from ITO and electrodes 1120, 1130 were fabricated from nickel and adhered to the lens with either Frost Fighter epoxy or MG Chemicals epoxy. Wire leads 1152, 1154 were soldered to the electrodes. A first group of the embodiments included 2 wire leads per electrode and a second group of the embodiments included 5 wire leads per electrode. A 9V power signal was applied to the lenses. Power and current and power were measured, and electrical resistance was calculated. Electrical resistance corresponding to lenses that included 2 wire leads per electrode ranged from 62.7 ohms to 71.2 ohms. Electrical resistance corresponding to lenses that included 5 wire leads per electrode ranged from 64.3 ohms to 74.4 ohms.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

The techniques described in this disclosure may also be embodied or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. It should be understood that the term "computer-readable storage media" refers to physical storage media, and not signals, carrier waves, or other transient media.

It will also be recognized by those skilled in the art that, while the disclosure has been described above in terms of preferred embodiments, it is not limited thereto. Various features and aspects of the above-described disclosure may be used individually or jointly according to the claims. Further, although the disclosure has been described in the context of its implementation in a particular environment, and for particular applications (e.g. for helmet-mounted visors), those skilled in the art will recognize that its usefulness is not limited thereto and that the present disclosure can be beneficially utilized in any number of environments and implementations where it is desirable to clear condensed vapor from lenses or other surfaces.

## Claims

1. An active anti-fog (AAF) eyewear system comprising:
a lens (1100) having an inner surface (1190) that is proximal to a wearer (200) when the AAF eyewear system is worn, an outer surface that opposes the inner surface, and an electrically conductive layer (1110) disposed on the inner surface;
a first electrode (1120) disposed in electrical communication with the electrically conductive layer; and
a second electrode (1130) disposed in electrical communication with the electrically conductive layer;
a power source (1630);
wherein the first electrode is in electrical communication with a first terminal of the power source (1630) and the second electrode is in electrical communication with a second terminal of the power source to provide electrical current through the electrically conductive layer between the first electrode and the second electrode; and
wherein the first electrode and the second electrode are both disposed along one of a top edge (1185, 1187) and a bottom edge (1186) of the lens as oriented when the AAF eyewear system is worn by the wearer.

2. The AAF eyewear system of claim 1, wherein the first electrode (1120) is disposed proximal to a top left edge (1185) of the lens and the second electrode (1130) is disposed proximal to a top right edge (1187) of the lens.

3. The AAF eyewear system of one of claims 1 or 2, further comprising at least one functional layer (1160, 1162) disposed on the outer surface, the at least one functional layer comprising one or more of: a reflective coating; a hydrophobic coating; and a tint coating.

4. The AAF eyewear system of one of claims 1 to 3, wherein the electrically conductive layer comprises indium tin oxide (ITO).

5. The AAF eyewear system of one of claims 1 to 4, wherein the first electrode and the second electrode are each electrically connected to the electrically conductive layer and are each adhered to the optical lens with an electrically conductive adhesive.

6. The AAF eyewear system of one of claims 1 to 5, wherein the power source is electrically connected to the first electrode at two or more locations on the first electrode and is electrically connected to the second electrode at two or more locations on the second electrode.

7. The AAF eyewear system of one of claims 1 to 5, wherein the power source is electrically connected to the first electrode at three or more locations on the first electrode and is electrically connected to the second electrode at three or more locations on the second electrode.

8. The AAF eyewear system of one of claims 1 to 7, wherein the lens is disposed in a frame that encloses at least a portion of the top edge of the lens and does not enclose the bottom edge, wherein the frame covers the first and second electrodes and includes electrical contacts for electrically connecting with the first and second electrodes.

9. The AAF eyewear system of one of claims 1 to 8, wherein:
the lens is attachable to a lens holder of the AAF eyewear system;
the lens holder is configurable to dispose the lens in front of eyes of the wearer of the AAF eyewear system with a first heated region of the lens positioned along a line of sight of the wearer; and
when an electrical current is supplied by the power source, a magnitude of a temperature of the first heated region of the lens that is greater than a magnitude of temperature of other regions of the lens.

## Patentansprüche

1. Aktives Antibeschlag-(AAF-)Augenschutzsystem, umfassend:
eine Linse (1100) mit einer Innenfläche (1190), die nahe bei einem Träger (200) liegt, wenn das AAF-Augenschutzsystem getragen wird, einer Außenfläche, die der Innenfläche gegenüberliegt, und einer elektrisch leitfähigen Schicht (1110), die auf der Innenfläche angeordnet ist;
eine erste Elektrode (1120), die in elektrischer Verbindung mit der elektrisch leitfähigen Schicht angeordnet ist; und
eine zweite Elektrode (1130), die in elektrischer Verbindung mit der elektrisch leitfähigen Schicht angeordnet ist;
eine Stromquelle (1630);
wobei die erste Elektrode in elektrischer Verbindung mit einem ersten Anschluss der Stromquelle (1630) steht und die zweite Elektrode in elektrischer Verbindung mit einem zweiten Anschluss der Stromquelle steht, um elektrischen Strom durch die elektrisch leitfähige Schicht zwischen der ersten Elektrode und der zweiten Elektrode bereitzustellen; und
wobei die erste Elektrode und die zweite Elektrode beide entlang einer von einer Oberkante (1185, 1187) und einer Unterkante (1186) der Linse in der Ausrichtung angeordnet sind, in der das AAF-Augenschutzsystem von dem Träger getragen wird.

2. AAF-Augenschutzsystem nach Anspruch 1, wobei die erste Elektrode (1120) nahe bei einer oberen linken Kante (1185) der Linse angeordnet ist und die zweite Elektrode (1130) nahe bei einer oberen rechten Kante (1187) der Linse angeordnet ist.

3. AAF-Augenschutzsystem nach einem der Ansprüche 1 oder 2, ferner umfassend mindestens eine Funktionsschicht (1160, 1162), die auf der Außenfläche angeordnet ist, wobei die mindestens eine Funktionsschicht eines oder mehrere umfasst von: einer reflektierenden Beschichtung; einer hydrophoben Beschichtung; und einer Tönungsbeschichtung.

4. AAF-Augenschutzsystem nach einem der Ansprüche 1 bis 3, wobei die elektrisch leitfähige Schicht Indium-Zinn-Oxid (ITO) umfasst.

5. AAF-Augenschutzsystem nach einem der Ansprüche 1 bis 4, wobei die erste Elektrode und die zweite Elektrode jeweils elektrisch mit der elektrisch leitfähigen Schicht verbunden sind und jeweils mit einem elektrisch leitfähigen Klebstoff an der optischen Linse angeklebt sind.

6. AAF-Augenschutzsystem nach einem der Ansprüche 1 bis 5, wobei die Stromquelle an zwei oder mehr Stellen an der ersten Elektrode elektrisch mit der ersten Elektrode verbunden ist und an zwei oder mehr Stellen an der zweiten Elektrode elektrisch mit der zweiten Elektrode verbunden ist.

7. AAF-Augenschutzsystem nach einem der Ansprüche 1 bis 5, wobei die Stromquelle an drei oder mehr Stellen an der ersten Elektrode elektrisch mit der ersten Elektrode verbunden ist und an drei oder mehr Stellen an der zweiten Elektrode elektrisch mit der zweiten Elektrode verbunden ist.

8. AAF-Augenschutzsystem nach einem der Ansprüche 1 bis 7, wobei die Linse in einem Rahmen angeordnet ist, der mindestens einen Teil der Oberkante der Linse umschließt und die Unterkante nicht umschließt, wobei der Rahmen die erste und die zweite Elektrode bedeckt und elektrische Kontakte zum elektrischen Verbinden mit der ersten und der zweiten Elektrode aufweist.

9. AAF-Augenschutzsystem nach einem der Ansprüche 1 bis 8, wobei:
die Linse an einem Linsenhalter des AAF-Augenschutzsystems anbringbar ist;
der Linsenhalter konfigurierbar ist, um die Linse vor Augen des Trägers des AAF-Augenschutzsystems anzuordnen, wobei ein erster beheizter Bereich der Linse entlang einer Sichtlinie des Trägers positioniert ist; und
wenn ein elektrischer Strom von der Stromquelle zugeführt wird, ein Betrag einer Temperatur des ersten beheizten Bereichs der Linse, der größer ist als ein Betrag einer Temperatur anderer Bereiche der Linse.

## Revendications

1. Système de lunettes actives antibuée (AAF) comprenant :
un verre (1100) ayant une surface interne (1190) qui est proximale à un porteur (200) lorsque le système de lunettes AAF est porté, une surface externe qui est opposée à la surface interne, et une couche électriquement conductrice (1110) disposée sur la surface interne ;
une première électrode (1120) disposée en communication électrique avec la couche électriquement conductrice ; et
une seconde électrode (1130) disposée en communication électrique avec la couche électriquement conductrice ;
une source d'alimentation (1630) ;
dans lequel la première électrode est en communication électrique avec une première borne de la source d'alimentation (1630) et la seconde électrode est en communication électrique avec une seconde borne de la source d'alimentation pour fournir du courant électrique à travers la couche électriquement conductrice entre la première électrode et la seconde électrode ; et
dans lequel la première électrode et la seconde électrode sont toutes deux disposées le long de l'un d'un bord supérieur (1185, 1187) et d'un bord inférieur (1186) du verre tel qu'il est orienté lorsque le système de lunettes AAF est porté par le porteur.

2. Système de lunettes AAF selon la revendication 1, dans lequel la première électrode (1120) est disposée proximalement à un bord supérieur gauche (1185) du verre et la seconde électrode (1130) est disposée proximalement à un bord supérieur droit (1187) du verre.

3. Système de lunettes AAF selon l'une des revendications 1 ou 2, comprenant en outre au moins une couche fonctionnelle (1160, 1162) disposée sur la surface externe, l'au moins une couche fonctionnelle comprenant un ou plusieurs parmi : un revêtement réfléchissant ; un revêtement hydrophobe ; et un revêtement teinté.

4. Système de lunettes AAF selon l'une des revendications 1 à 3, dans lequel la couche électriquement conductrice comprend de l'oxyde d'étain et d'indium (ITO).

5. Système de lunettes AAF selon l'une des revendications 1 à 4, dans lequel la première électrode et la seconde électrode sont chacune connectées électriquement à la couche électriquement conductrice et sont chacune collées au verre optique au moyen d'un adhésif électriquement conducteur.

6. Système de lunettes AAF selon l'une des revendications 1 à 5, dans lequel la source d'alimentation est connectée électriquement à la première électrode au niveau de deux emplacements ou plus sur la première électrode et est connectée électriquement à la seconde électrode au niveau de deux emplacements ou plus sur la seconde électrode.

7. Système de lunettes AAF selon l'une des revendications 1 à 5, dans lequel la source d'alimentation est connectée électriquement à la première électrode au niveau de trois emplacements ou plus sur la première électrode et est connectée électriquement à la seconde électrode au niveau de trois emplacements ou plus sur la seconde électrode.

8. Système de lunettes AAF selon l'une des revendications 1 à 7, dans lequel le verre est disposé dans une monture qui enferme au moins une partie du bord supérieur du verre et n'enferme pas le bord inférieur, dans lequel la monture recouvre les première et seconde électrodes et inclut des contacts électriques pour une connexion électrique avec les première et seconde électrodes.

9. Système de lunettes AAF selon l'une des revendications 1 à 8, dans lequel :
le verre peut être fixé à un support de verre du système de lunettes AAF ;
le support de verre est configurable pour disposer le verre devant les yeux du porteur du système de lunettes AAF avec une première région chauffée du verre positionnée le long d'une ligne de visée du porteur ; et
lorsqu'un courant électrique est fourni par la source d'alimentation, une magnitude d'une température de la première région chauffée du verre est supérieure à une magnitude de température d'autres régions du verre.
